# EUROPEAN PATENT SPECIFICATION

(11) **EP 2 485 607 B1**
(45) Date of publication and mention of the grant of the patent: **16.05.2018**
(21) Application number: 10822824.8
(22) Date of filing: 11.10.2010
(51) Int. Cl.: A23G 3/42, A23G 3/48, A23G 9/34, A23G 9/42, A23L 29/10, A23L 33/22

(54) **LOW FAT WHIPPABLE EMULSIONS WITH DIETARY FIBERS**
SCHLAGBARE EMULSIONEN MIT GERINGEM FETTANTEIL UND BALLASTSTOFFEN
EMULSIONS À FOUETTER, À TENEUR RÉDUITE EN MATIÈRES GRASSES ET CONTENANT DES FIBRES ALIMENTAIRES

(30) Priority: 09.10.2009 US 250335 P
(43) Date of publication of application: 15.08.2012
(73) Proprietor: Rich Products Corporation, Buffalo, NY 14213 (US)
(72) Inventor: SHARMA, Shri K., Amherst, New York 14228 (US); GUTIERREZ DEL TORO, Abelardo, Buffalo, New York 14222 (US); SHARMA, Aman K., Amherst, New York 14228 (US)
(74) Representative: Appleyard Lees IP LLP
(86) International application number: PCT/US2010/052183
(87) International publication number: WO 2011/044557

(56) References cited:
- EP-A1- 1 570 746
- EP-A2- 0 714 609
- WO-A1-2008/045790
- WO-A2-2004/103088
- US-A- 4 400 406
- US-A- 5 230 919
- US-A- 5 505 982
- US-A- 5 609 904
- US-A- 5 759 609
- US-A- 5 789 004
- US-A- 6 025 007
- US-H1- H2 095

## Description

### FIELD OF THE INVENTION

The present invention relates generally to the field of whippable food products and more particularly to a low fat whippable food product containing fiber and having desirable mouth-feel and stability characteristics.

### BACKGROUND OF THE INVENTION

Whippable food products are commonly used as toppings, icings, fillings and the like for cakes and other desserts. Different approaches have been used to obtain formulations that possess desirable characteristics including longer shelf life of both unwhipped and whipped products, ease of preparation and use of the whipped product, stability and performance characteristics; the conditions under which whipping can be performed including the whipping temperature; display temperature and display time; and the ease of spreading of the whipped product etc.

US 4400406 is directed toward whipped frozen dessert products that emulate features of conventional soft serve ice cream but at the lower temperatures of home freezers, the products containing multiple stabilisers, multiple emulsifiers and multiple sugars.

US 6025007 teaches a cellulose composition useful as a texturizing, thickening, stabilizing gelling or bulking agent for food systems.

US 5505982 relates toward chocolate containing a composite of surfactant/cellulose. The composite can be used as a bulking agent or functional formulary aid in low-moisture or in fat phase compositions.

US 5789004 discloses a stabilizer composition useful for reduced fat frozen desserts and whipped toppings containing microcrystalline cellulose coprocessed with guar and microcrystalline cellulose coprocessed with carboxymethylcellulose.

US H2095 H is directed toward an inulin/colloidal hydrolyzed cellulose composition as a fat substitute.

EP 1570746 teaches frozen aerated packaged ice confection with high softness at 255 K (-18°C).

Consumer selection of whippable products also depends upon the feel and taste of the whipped product, and various stability indicators. At the same time, consumers are becoming more conscious about the caloric value of foods. Therefore, low fat preparations are desirable, but reducing fat results in poor organoleptic properties and therefore reduced consumer acceptance.

Accordingly, there is an ongoing and unmet need for whippable products having low fat content but desirable organoleptic characteristics and good stability.

### SUMMARY OF THE INVENTION

The present invention provides topping formulations containing insoluble fiber and low fat (10% or less; typically between 1 to 10%) and yet mimicking the mouth-feel and organoleptic properties of compositions containing more than double the fat (such as 20%), according to claim 1. The particle size distribution for the compositions of the present invention shows a shift toward larger particle sizes as compared to particle size distributions for the similar formulation without fiber.

The invention also provides a method for preparing a formulation comprising 10% or less fat and 0.1 to 0.5% insoluble fiber, according to claim 11. The method comprises mixing fiber in the water phase under high shear conditions such that the fiber is fully hydrated. Other ingredients are then mixed to form topping formulations which are whippable and provide desirable mouth-feel and organoleptic properties. The compositions can be used whipped or unwhipped as toppings or icings on various food products.

### BRIEF DESCRIPTION OF THE DRAWINGS

Figure 1. Particle size distribution for formulation containing 5% fat and 0.2% fiber (labeled as 208A); and for formulation containing 8% fat and 0.2% fiber (labeled as 208B).
Figure 2. Particle size distribution for formulation containing 5% fat and 0.2% fiber (labeled as 193B); and for formulation containing 5% fat and no fiber (labeled as 193A).
Figure 3. Particle size distribution for formulation containing 5% hydrogenated oil without fiber (labeled as "hydrogenated oil without corn fiber"; formulation containing 5% hydrogenated oil with 0.2% fiber (labeled "hydrogenated oil with corn fiber"); and formulation containing 5% non-hydrogenated oil with 0.2% fiber (labeled "non-hydrogenated oil with corn fiber).
Figure 4. Particle size distribution for formulation containing 20% fat without fiber (labeled as "Regular topping with 20% of Fat"); and for formulation containing 5% fat and 0.2% fiber (labeled as "5% Fat Topping").

### DETAILED DESCRIPTION OF THE PREFERRED EMBODIMENTS

All percentages are weight percents unless otherwise indicated. When a range is indicated then all percentages or amounts to the tenth decimal point are included within the range.

This invention provides a whippable food product having less than 10% fat and improved stability. The whipped products have good organoleptic characteristics.

The present invention is based on the surprising finding that low fat fiber based topping formulation can be produced if prepared using a particular processing technique. Previously, we had observed that a low fat topping formula developed using corn based fibers was not successful - when the fiber powder was dispersed in the oil with other gums, stabilizers and emulsifiers, it settled at the bottom of the tank and provided no unique functionality. In the present invention, it was surprisingly observed that the fiber needed to be mixed in the aqueous phase using high shear mixing conditions to achieve functionality. It is believed that this was due to the fiber being substantially or fully hydrated. Thus, in one embodiment, the present invention provides a formulation that does not have any detectable sedimented fiber.

In one embodiment, the present formulation comprises water, corn syrup, sugar, hydrogenated palm kernel oil, sodium caseinate, methyl cellulose, sodium stearoyl lactylate, corn dietary fibers, emulsifier, stabilizer and flavor.

### Fats

The triglyceride fat component contributes to the stability of the product and is 10% or less. In various embodiments, the fat is 1, 2, 3, 4, 5, 6, 7, 8, 9 and 10%. The fats can be palm kernel oil, coconut oil, or partially hydrogenated, hydrogenated or winterized fraction of the above, or palm oil, cottonseed oil, lard, tallow or a stearin fraction of any of the above. In one embodiment, the triglyceride fat component is the hydrogenated stearin fraction of palm kernel oil. In one embodiment, the only fat present in the composition is palm kernel oil, coconut oil, or a combination of palm kernel oil and coconut oil or any faction thereof.

### Fiber

The fiber in the present formulation is insoluble fiber. In one embodiment, the fiber is corn fiber or oat fiber. The corn or oat fiber is a multifunctional food ingredient which functions as a stabilizer with thickening, texturization and water binding agent; also an emulsifier with fat mimicking properties with binding, shaping, suspension and pH control attributes. It is an insoluble dietary fiber with non-caloric value and complements to oil, gums and starches. In the present invention it was observed that it can replace the organoleptic functionality of fats without affecting the taste, mouth feel and texture. In one embodiment, corn or oat fibers can be used at 0.1, 0.2, 0.3, 0.4, or 0.5%. An example of a suitable fiber is the Z-trim fiber.

### Emulsifiers

A wide variety of emulsifiers may be employed in amounts on the same order as known in the art of oil-in-water emulsions, for example, about from 0.1% to 0.6%, preferably about from 0.2% to 0.4% as permissible under FDA guidelines. Suitable emulsifiers include lecithin, hydroxylated lecithin; mono, di, or polyglycerides of fatty acids, such as stearin and palmitin mono and diglycerides, polyoxyethylene ethers of fatty esters of polyhydric alcohols, such as the polyoxyethylene ethers of sorbitan monostearate (polysorbate 60) or the polyoxyethylene ethers of sorbitan distearate; fatty esters of polyhydric alcohols such as sorbitan monostearate; polyglycerol esters of mono and diglycerides such as hexaglyceryl distearate; mono- and diesters of glycols such as propylene glycol monostearate, and propylene glycol monopalmitate, succinoylated monoglycerides; and the esters of carboxylic acids such as lactic, citric, and tartaric acids with the mono- and diglycerides of fatty acids such as glycerol lacto palmitate and glycerol lacto stearate, and calcium or sodium stearoyl lactylates and all members of the sucrose ester family thereof, all varieties of diacetyltartaric esters of fatty acids, "DATEMS", and the like, and mixtures thereof.

### Stabilizers

The emulsion compositions of the present invention may also include one or more stabilizers of hydrophilic colloids. These stabilizers are natural, i.e. vegetable, or synthetic gums and may be, for example, carrageenan, guar gum, alginate, xanthan gum and the like or methylcellulose (Methocel A 15 & A 400), carboxy-methylcellulose, ethylcellulose, hydroxy-propylmethylcellulose (METHOCEL F-50 HG), and microcrystalline cellulose. Typically, a gum or combination of gums is employed with a sugar, e.g. dextrose, carrier. The amount of these stabilizers can be varied widely in accordance with the amounts required in prior art compositions, generally about from 0-2%, preferably about 0.1-0.5% as permissible under FDA guidelines. In one embodiment, the stabilizers are 0.3 to 1.0% and in another embodiment, the stabilizers are 0.4 to 0.8%.

### Proteins

Milk proteins such as isolated sodium, potassium or calcium caseinates, protein provided as skim milk, nonfat dry milk, milk protein concentrate, whey protein concentrates, whey protein isolates, alpha lactalbumin and beta lactoglobulin can be used. The proteins are generally known to assist in the emulsification and stability of the whipped products. Vegetable proteins including but not limited to soy protein, pea protein, wheat protein, cottonseed protein, peanut protein, and corn protein are also useful. Suitable protein concentration is 0.5 to 2.0% and all percentages therebetween to the tenth decimal place.

### Sweeteners

The sugars useful for the present invention include, monosaccharides, disaccharides and polysaccharides. The sweeteners may be comprised of one or more sugars, such as sucrose, fructose, dextrose and/or intensive sweeteners, such as aspartame, acetosulfame, alitame, saccharin, cyclamates, and trichloro sucrose. Suitable sugars concentrations are 10-20% and all percentages therebetween. In the event one or more intensive sweeteners are used, bulking agents may be included in the formulation to provide additional solids and provide body to the foam structure. Typical bulking agents would be maltodextrin, polydextrose, polyglucose, xylitol, mannitol and sorbitol. For formulation calculations, all of these materials are considered to be included in the sweetener component. For taste purposes and for ease of operation, the sweetener component will normally consist of sucrose or sucrose-fructose combinations. The formulation may also contain high fructose corn syrup, corn syrups with varying levels of dextrose equivalents such as 36DE, 43DE, 63DE or powder of corn syrup solids. Corn syrup solids are in the range of 10-25% and all percentages therebetween.

### Salts

The salts useful for the present invention is any edible salt that does not interfere with other ingredients or render an undesirable taste. Salts generally act as buffers. Examples of useful salts are common salt (sodium chloride), sodium or potassium phosphates, citrates, chlorides, and the like. Salts are generally used in the range of 0.1 to 0.5%.

### Other Ingredients

Other ingredients that are useful for the present invention include flavoring agents, colorants, vitamins etc. Suitable flavoring agents can be employed to impart vanilla, cream, chocolate, coffee, maple, spice, mint, butter, caramel, fruit and other flavors.

The following table provides examples of low fat toppings. In various embodiments, the compositions of the present invention comprise, consist essentially of, or consist of the formulations provided in Tables 1 and 2 and other formulations provided herein].

**Table 1**

| **Ingredients %** | **Range for Ingredients (wt %)** | **Preferred Range (wt %)** |
|---|---|---|
| Water | 35 - 65 | 40-60 |
| Fat | 4 - 10 | 5 - 8 |
| Protein | 0.5 - 2.0 | 0.6- 1.0 |
| Emulsifier | 0.1 - 0.6 | 0.2-0.4 |
| Sugar | 10 - 20 | 12 - 18 |
| Corn syrup solids | 10 - 25 | 15-20 |
| Gums & Stabilizer | 0.3 - 1.0 | 0.4 - 0.8 |
| Salt | 0.1 - 0.5 | 0.2 - 0.4 |
| Corn or Oat fibers | 0.1 - 0.5 | 0.2 - 0.3 |
| Color | 0.001 - 0.05 | 0.01 - 0.03 |
| Flavor | 0.1 - 0.6 | 0.2 - 0.4 |

The following table provides two examples of low fat toppings.

**Table 2**

| **Ingredients** | **Formula 1 Wt%** | **Formula 2 Wt%** |
|---|---|---|
| Fat | 5.00 | 8.00 |
| SSL | 0.30 | 0.30 |
| Sugar | 16.00 | 16.00 |
| Corn syrup solids (presented as solids, but can be either liquid syrup or dry powder solids. | 20.00 | 18.00 |
| Sodium Caseinate | 0.60 | 0.60 |
| Methocel and/or gums | 0.45 | 0.45 |
| Salt & Buffer salt | 0.22 | 0.22 |
| Z-Trim Fiber | 0.20 | 0.20 |
| Flavor cream | 0.20 | 0.20 |
| Water | 57.03 | 56.03 |
| **Total** | 100.0 | 100.0 |

The whipped product produced according to the above method can be stored and distributed in a frozen form or at refrigerated temperatures.

To obtain a whipped confection, the whippable product of the present invention can be whipped using a paddle, whip, traditional batch mixers (Hobart, Kitchen Aid, Kenwood etc), aeration devices including continuous mixers and the like. The whippable product can be whipped to an overrun of 400% or more.

A variety of whipped confections can be made from the product of this invention. Such confections include fillings, icings, toppings, decorations and the like which can be used for cakes, pies, cookies and the like. The toppings, icings and fillings are used according to routine methods. Further, the whipped product of the present invention may be used with other components to provide desired toppings, icings or fillings.

The following example further illustrates the invention, but are not intended to be limiting in any way.

### EXAMPLE 1

### Method of Preparation:

Z-trim sample was obtained from the Z-Trim Holding Inc. It is a plant-derived corn dietary fiber with a cellulose-to-hemi-cellulose ratio of approximately 80:20. Z Trim has high viscosity, water holding properties and fat mimic properties. Fat used was fully hydrogenated stearin fractionated palm kernel oil; Corn syrup solids were 63DE/43. The formulas contained no high fructose corn syrup

Some samples were prepared in mini homogenizer system with and without Z-trim dietary fibers with 5% and 8% fat content (193A, 193B, 193C, 193D). 193B is Formula 1 from Table 2; 193D is Formula 2 from Table 2; 193A is Formula 1 without any fiber; and 193C is Formula 2 without any fiber. Additional samples were prepared and were run in the pilot lab to confirm the results.

The key processing step in manufacturing low fat topping is mixing corn or oat dietary fiber under high shear mixing conditions (for example mixing at a setting or 9 or 10 on a hand held Kitchen Aid blender) with other major ingredients such as water, sugar, corn syrup, emulsifier and stabilizer. The corn fiber becomes fully functional upon hydration in water under high shear mixing at 323 K to 338 K (50 to 65°C); otherwise it settles down at the bottom of the container/tank with no useful or unique characteristics. Upon mixing of corn fiber, protein, emulsifier, stabilizer, sugar and corn syrup, palm kernel or vegetable oils are added to the mix under normal agitation. The mix is heated at 347 K to 353 K (165 to 175°F) and held for 5 to 15 min for pasteurization before homogenization and cooling. The homogenization is done in single stage or double stage at 10.35 to 41.37 MPa (1500 to 6000 psi) (first stage) 0 to 3.45 MPa (0 to 500 psi) at second stage for a total of 20.68 to 48.26 MPa (3000 to 7000 psi). The resulting homogenized emulsion is cooled using plate or tubular heat exchanger in single or double stages at 303 K to 308 K (85 to 95F) (first stage) and final cooling to 275 K to 280 K (35 to 45°F) in second stage. The cooled product is packaged in suitable containers and frozen at 255 K (-18°C) for 3 to 10 days. The frozen product is thawed and whipped on Hobart, Kitchen Aid or other manual mixer to suitable texture and firmness for final application on cake decoration or used in fillings. In case of pre-whipped product, the cooled product is held at refrigerated temperature (280 K to 283 K (45 to 50°F)) for 0.5 to 24 hours before being whipped on a continuous type of mixer. It should be understood that when ranges are disclosed in integers, all integers between the ranges are also disclosed, and when a range is disclosed between a value given to the tenth of a decimal and an integer or between two values given to the tenth of a decimal, all values therebetween to the tenth of a decimal are disclosed.

The pre-whipped product exhibited some unique properties after freezing and had texture of ice-cream like products. It can be consumed directly from the freezer as ice-cream or frozen novelty desserts. A summary of the evaluation results for topping with 5% and 8% fat are shown in table in Table 3.

**Table 3. Summary of evaluation results for 5% and 8% fat containing Topping**

| Products | Whip Time (min) | % Over run | Rosette time, min | Taste | Texture | Stability of Cake | Stability in Bowl |
|---|---|---|---|---|---|---|---|
| 1. 934-193A sample, 5% fat, no Z-trim | 45 | 453 -483 | 80-90 | Good | Soft | Soft, little bulging and cracking | Air cell coalesce nce |
| 2.934-193B sample, 5% fat, with 0.2% Z-trim | 30 | 394-430 | 60-65 | Good | Smooth, firm | Good | Good |
| 3.934-193C sample, 8% fat, no Z-trim | 90 | 393-421 | 55-60 | Good | Smooth, slightly soft | Good | Good |
| 4. 934-193D sample, 8% fat, 0.2% Z-trim | 25 | 399-426 | 35 -40 | Good, | Smooth, firm | Good | Good |
| 5.934-208A sample, 5% fat, with 0.2% Z-trim | 60 | 437-480 | >60 | Good | Smooth, not very firm | Good | Good |
| 6. 934-208B sample, 8% fat, 0.2% Z-trim | 20 | 422 - 440 | 55 - 60 | Good, | Smooth, firm | Good | Good |

| | | | | | | | |
|---|---|---|---|---|---|---|---|
| Note: 208A is the same as 193B and 208B is the same as 193D. An indication of "Good" means that whipped product had no air cell coalescence, syneresis (water separation) or bulging or bubbling on the cake. | | | | | | | |

Some features of the present toppings are as follows:

The 5% fat sample provides less than 0.5 g fat per 9 g serving size and therefore is desirable for calorie conscious individuals. The sample 193A with no Z-trim was very soft and was not stable on cake and bowl, compared to the sample 193B with 0.2% Z-trim fibers which provided good smooth, firm texture and mouth feel similar to regular fat like topping. It also had good stability on cake with no cracking, bubbling or bulging after 24. Similarly, it showed good stability in bowl with no syneresis, cracking or air cell coalescence. After 48 hours, the sample showed some soft texture with air cell coalescence and syneresis. The results in pilot lab samples (208A) also showed comparable results. The results in the pilot lab confirmed the evaluation results obtained earlier on a bench scale.

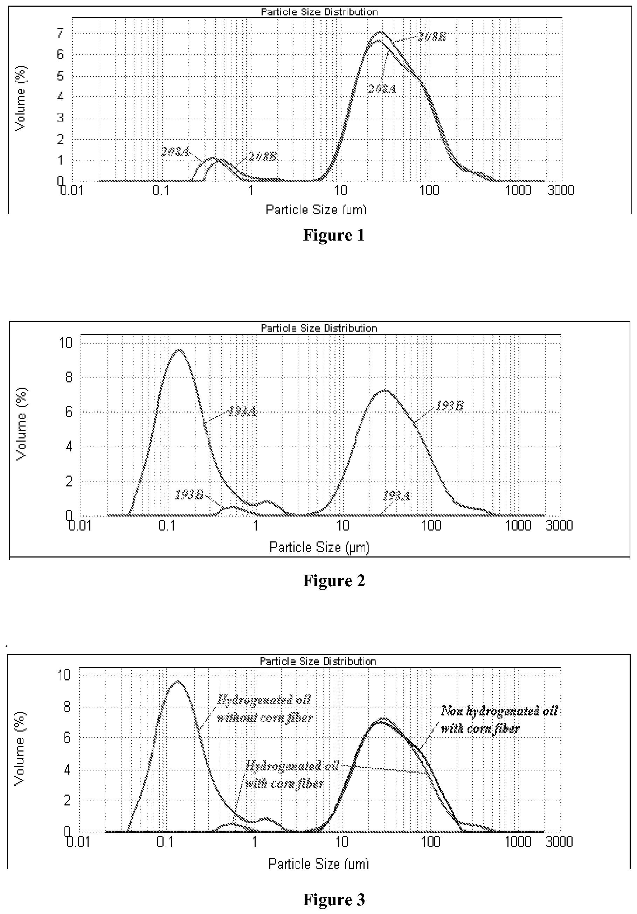

The 8% fat sample (samples 193C and 193D) also showed good performance and stability. Sample 193D also had firmer texture compared to sample 193C. The results were reproducible in pilot lab made sample as shown in Figure 3 for sample 208B.

The Z-trim has right particle size with slippery characteristics, which provided good firm texture, smoothness and full fat like attributes in fat free toppings.

**Table 4. Particle size (microns) of 5% fat and 8% fat Topping**

| Sample | Residual | D [4,3] Volume weighted mean | D [3,2] Surface weighted mean | d(0.1) | d(0.5) | d(0.9) |
|---|---|---|---|---|---|---|
| Low Fat Topping (5% fat) topping with corn fiber 934-208A | 0.803 | 54.749 | 4.962 | 9.925 | 33.766 | 120.567 |
| Low Fat (8%) topping with corn fiber 934-208B | 0.952 | 37.873 | 0.426 | 0.116 | 22.752 | 93.090 |

The particle sizes of fat free and low fat toppings are shown in Table 4 and Figure 1. The 2^{nd} peak in the range of 5 to 200 micron size is represented by Z-trim corn or oat fibers present in the toppings. These particles of corn fibers and oat fibers provide fat like properties in terms of mouth feel, texture and other sensory characteristics. The terms microns and micrometers are used interchangeably.

There is a significant difference in particle size in fat free fat toppings with the presence of corn fiber (193B) or without corn fiber (193A) as shown in Table 5.

**Table 5. Particle size analysis of low fat topping with and without corn fiber**

| Sample | Residual | D [4,3] Volume weighted mean | D [3,2] Surface weighted mean | d(0.1) | d(0.5) | d(0.9) |
|---|---|---|---|---|---|---|
| **934-193A without corn fiber** | 0.899 | 0.242 | 0.121 | 0.068 | 0.139 | 0.406 |
| **934-193B with corn fiber** | 0.991 | 43.552 | 0.957 | 0.254 | 29.032 | 97.506 |

The volumetric weighted mean particle size diameter of topping without corn fiber is 0.242 micron compared to 43.552 micron for topping with the presence of corn fibers. This can also be seen more clearly in Figure 2. The topping 934-193A has main first peak in the range of 0.05 to 1 micron, whereas the topping 193B has very small first peak and very large second peak 5 to 200 micron size. It is considered that the second peak of corn fiber is at least in part responsible for mimicking the fat like properties of the overall topping characteristics.

In one embodiment, the 90% of the particles are between 5 and 200 microns (micrometers). In another embodiment, at least 90% of the particles are larger than 2 microns. In another embodiment, at least 90 to 95% particles (and all percentages therebetween) are larger than 2 microns. In yet another embodiment, at least 50, 60, 70, 80, 90 or 95% of the particles are between 1 micron and 200 microns or between 2 and 200 microns. In yet another embodiment, at least 50, 60, 70, 80, 90 or 95% of the particles are between 1 micron and 150 microns. In another embodiment, between 80 to 90% particles are between 5 and 200 microns. It is considered that the size distribution, at least in part responsible for the desirable properties, is due to mixing of fiber in the water phase under high shear conditions leading to hydration of the fiber.

In another embodiment, the volume weighted mean of the particle size of the present invention is at least 30 microns. In various embodiments, it can be 30, 35, 40, 45, 50, 55, and 60 microns (and all values to the tenth decimal place therebetween) or between 30 to 60 microns.

In another embodiment, the samples were prepared with hydrogenated and non-hydrogenated oil with corn fiber and compared to a sample without corn fiber. Results on particle size are shown in Figure 3 and Table 6.

**Table 6**

| **Sample** | **Particle size distribution** |
|---|---|
| Sample with hydrogenated oil and without corn fiber | 98.03% of the particles size is between 0.047 µm and 2 µm |
| Sample with hydrogenated oil and with corn fiber | 97.81% of the particles size is between 4.743 µm and 474.275 µm |
| Sample with non hydrogenated oil and with corn fiber | 99.37% of the particles size is between 6.325 µm and 200 µm |

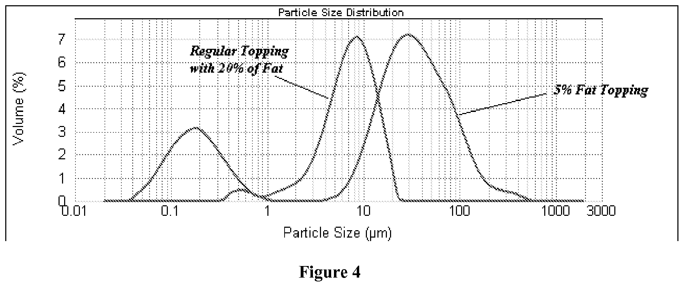

It is considered that at least part of the reason why the formulations of the present invention provide organoleptic properties mimicking higher amount of fat is that the fiber prepared as described herein provides particles sizes closer to the particle size distribution seen with higher fat. For example, as shown in Figure 4, the particle size distribution of 5% fat containing fiber is significantly different from that of 5% fat without fiber and is closer in particle size distribution to 20% fat. These larger particles are at least in part responsible for providing a good mouthfeel and desirable organoleptic properties.

## Claims

1. A whippable composition which can be whipped to an overrun of about 400% or more comprising 1 to 10% fat, 0.1 to 0.5% fiber, 0.5 to 2.0% protein, 0.1 to 0.6% emulsifiers, 10-20% sweeteners, 0.3 to 1.0% stabilizers and 35 to 65% water, wherein the volume weighted mean particle size diameter of at least 80% of the particles is between 2 and 200 micrometers, and wherein the fiber is insoluble fiber.

2. The composition of claim 1, wherein the volume weighted mean particle size diameter of the particles is between 30 and 60 microns.

3. The composition of claim 1, wherein the fiber is oat or the fiber is corn.

4. The composition of claim 1, wherein the fat is palm kernel oil or coconut oil or combinations and fractions thereof.

5. The composition of claim 1, wherein the fat is from 5 to 8%, protein is from 0.6 to 1.0%, sweetener is from 12 to 18%, the composition further comprises corn syrup solids from 15 to 20%, and fiber is from 0.2 to 0.3%.

6. The composition of claim 1, wherein the emulsifier is an oil-in-water emulsifier.

7. The composition as defined in claim 1, wherein the stabilizer is selected from carrageenan, guar gum, alginate, xanthan gum, methylcellulose, carboxy-methylcellulose, ethylcellulose, hydroxy-propylmethylcellulose, and microcrystalline cellulose.

8. The composition as defined in claim 1, wherein the protein is selected from sodium caseinate, potassium caseinate, calcium caseinate, skim milk, nonfat dry milk, milk protein concentrate, whey protein concentrate, whey protein isolates, alpha lactalbumin, beta lactoglobulin, soy protein, pea protein, wheat protein, cottonseed protein, peanut protein, and corn protein.

9. The composition as defined in claim 1, wherein the whippable composition includes:
| | |
|---|---|
| Water | 35-65 wt% |
| Fat | 4-10 wt% |
| Protein | 0.5-2 wt% |
| Emulsifier | 0.1-0.6 wt% |
| Sugar | 10-20 wt% |
| Corn syrup solids | 10-25 wt% |
| Gums & Stabilizer | 0.3-1 wt% |
| Salt | 0.1-0.5 wt% |
| Corn or Oat fibers | 0.1-0.5 wt% |
| Color additive | 0.001 -0.05 wt% |
| Flavoring agent | 0.1 - 0.6 wt%. |

10. The composition as defined in claim 1, wherein the whippable composition includes:
| | |
|---|---|
| Water | 40-60 wt% |
| Fat | 5-8 wt% |
| Protein | 0.6-1 wt% |
| Emulsifier | 0.2-0.4 wt% |
| Sugar | 12-18 wt% |
| Corn syrup solids | 15-20 wt% |
| Gums & Stabilizer | 0.4-0.8 wt% |
| Salt | 0.2-0.4 wt% |
| Corn or Oat fibers | 0.2-0.3 wt% |
| Color additive | 0.01-0.03 wt% |
| Flavoring agent | 0.2-0.4%. |

11. A method for preparing a whippable topping composition comprising 10% or less fat and 0.1 to 0.5% fiber, wherein the fiber is insoluble fiber, the method comprising the steps of:
a. mixing the fiber in a water phase under high shear conditions such that said fiber is substantially or fully hydrated;
b. adding and mixing other ingredients to form said whippable topping composition;
wherein the volume weighted mean particle size diameter of at least 80% of the particles is between 2 and 200 micrometers.

12. The method as defined in claim 11, wherein the method further comprises the steps of
c. heating the composition to a temperature of at least 347 K (165°F) for at least 5 minutes;
d. homogenizing the composition;
e. cooling the composition; and
f. freezing the composition;
and wherein the other ingredients comprise fat, protein, emulsifiers, sweeteners and stabilizers.

13. The method as defined in claims 11 or 12, further including the step of whipping the whippable composition to an overrun of 400% or more.

14. The method as defined in claim 12 or 13, wherein the mixing of the fiber in water under high shear conditions occurs at a temperature of 323 K - 338 K (50°C-65°C).

## Patentansprüche

1. Aufschlagbare Zusammensetzung, die auf einen Aufschlag von etwa 400 % oder mehr aufgeschlagen werden kann, umfassend 1 bis 10 % Fett, 0,1 bis 0,5 % Ballaststoffe, 0,5 bis 2,0 % Protein, 0,1 bis 0,6 % Emulgatoren, 10-20 % Süßstoffe, 0,3 bis 1,0 % Stabilisatoren und 35 bis 65 % Wasser, wobei der volumengewichtete mittlere Partikelgrößendurchmesser von wenigstens 80 % der Partikel zwischen 2 und 200 Mikrometer beträgt und wobei der Ballaststoff unlöslicher Ballaststoff ist.

2. Zusammensetzung gemäß Anspruch 1, wobei der volumengewichtete mittlere Partikelgrößendurchmesser der Partikel zwischen 30 und 60 Mikrometer beträgt.

3. Zusammensetzung gemäß Anspruch 1, wobei der Ballaststoff Hafer ist der der Ballaststoff Mais ist.

4. Zusammensetzung gemäß Anspruch 1, wobei es sich bei dem Fett um Palmkernöl oder Kokosnussöl oder Kombinationen oder Fraktionen davon handelt.

5. Zusammensetzung gemäß Anspruch 1, wobei das Fett von 5 bis 8 % beträgt, das Protein von 0,6 bis 1,0 % beträgt, der Süßstoff von 12 bis 18 % beträgt, die Zusammensetzung ferner Maissirup-Feststoffe von 15 bis 20 % umfasst und die Ballaststoffe von 0,2 bis 0,3 % betragen.

6. Zusammensetzung gemäß Anspruch 1, wobei der Emulgator ein Öl-in-Wasser-Emulgator ist.

7. Zusammensetzung gemäß Anspruch 1, wobei der Stabilisator ausgewählt ist aus Carrageenan, Guargummi, Alginat, Xanthangummi, Methylcellulose, Carboxymethylcellulose, Ethylcellulose, Hydroxy-propylmethylcellulose und mikrokristalliner Cellulose.

8. Zusammensetzung gemäß Anspruch 1, wobei das Protein ausgewählt ist aus Natriumcaseinat, Kaliumcaseinat, Calciumcaseinat, Magermilch, fettfreier Trockenmilch, Milchproteinkonzentrat, Molkeproteinkonzentrat, Molkeproteinisolaten, alpha-Lactalbumin, beta-Lactoglobulin, Sojaprotein, Erbsenprotein, Weizenprotein, Baumwollsamenprotein, Erdnussprotein und Maisprotein.

9. Zusammensetzung gemäß Anspruch 1, wobei die aufschlagbare Zusammensetzung enthält:
| | |
|---|---|
| Wasser | 35-65 Gew.-% |
| Fett | 4-10 Gew.-% |
| Protein | 0,5-2 Gew.-% |
| Emulgator | 0,1-0,6 Gew.-% |
| Zucker | 10-20 Gew.-% |
| Maissirup-Feststoffe | 10-25 Gew.-% |
| Gummis und Stabilisator | 0,3-1 Gew.-% |
| Salz | 0,1-0,5 Gew.-% |
| Mais- oder Hafer-Ballaststoffe | 0,1-0,5 Gew.-% |
| Farbzusatzstoff | 0,001-0,05 Gew.-% |
| Aromastoff | 0,1-0,6 Gew.-%. |

10. Zusammensetzung gemäß Anspruch 1, wobei die aufschlagbare Zusammensetzung enthält:
| | |
|---|---|
| Wasser | 40-60 Gew.-% |
| Fett | 5-8 Gew.-% |
| Protein | 0,6-1 Gew.-% |
| Emulgator | 0,2-0,4 Gew.-% |
| Zucker | 12-18 Gew.-% |
| Maissirup-Feststoffe | 15-20 Gew.-% |
| Gummis und Stabilisator | 0,4-0,8 Gew.-% |
| Salz | 0,2-0,4 Gew.-% |
| Mais- oder Hafer-Ballaststoffe | 0,2-0,3 Gew.-% |
| Farbzusatzstoff | 0,01-0,03 Gew.-% |
| Aromastoff | 0,2-0,4 Gew.-%. |

11. Verfahren zum Herstellen einer aufschlagbaren Topping-Zusammensetzung, umfassend 10 % oder weniger Fett und 0,1 bis 0,5 % Ballaststoff, wobei der Ballaststoff unlöslicher Ballaststoff ist, wobei das Verfahren die Schritte umfasst:
a. Mischen des Ballaststoffs in einer Wasserphase unter Bedingungen mit hoher Scherung, so dass der Ballaststoff wesentlich oder vollständig hydratisiert wird;
b. Zugeben und Mischen anderer Inhaltsstoffe, um die aufschlagbare Topping-Zusammensetzung zu bilden;
wobei der volumengewichtete mittlere Partikelgrößendurchmesser von wenigstens 80 % der Partikel zwischen 2 und 200 Mikrometer beträgt.

12. Verfahren gemäß Anspruch 11, wobei das Verfahren ferner die Schritte umfasst:
c. Erhitzen der Zusammensetzung auf eine Temperatur von wenigstens 347 K (165 °F) für wenigstens 5 Minuten;
d. Homogenisieren der Zusammensetzung;
e. Abkühlen der Zusammensetzung; und
f. Einfrieren der Zusammensetzung;
und wobei die anderen Inhaltsstoffe Fett, Protein, Emulgatoren, Süßstoffe und Stabilisatoren umfassen.

13. Verfahren gemäß Ansprüchen 11 oder 12, ferner umfassend den Schritt des Aufschlagens der aufschlagbaren Zusammensetzung auf einen Aufschlag von 400 % oder mehr.

14. Verfahren gemäß Anspruch 12 oder 13, wobei das Mischen des Ballaststoffs in Wasser unter Bedingungen mit hoher Scherung bei einer Temperatur von 323 K bis 338 K (50 °C bis 65 °C) erfolgt.

## Revendications

1. Composition fouettable pouvant être fouettée jusqu'à un foisonnement d'environ 400% ou plus, comprenant de 1 à 10% de matières grasses, de 0,1 à 0,5% de fibres, de 0,5 à 2,0% de protéines, de 0,1 à 0,6% d'émulsifiants, 10-20% d'édulcorants, de 0,3 à 1,0% de stabilisants et de 35 à 65% d'eau, où le diamètre moyen de taille de particule pondéré en volume d'au moins 80% des particules est compris entre 2 et 200 micromètres, et où les fibres sont constituées de fibres insolubles.

2. Composition selon la revendication 1, où le diamètre moyen de taille de particule pondéré en volume des particules est compris entre 30 et 60 microns.

3. Composition selon la revendication 1, où les fibres sont issues d'avoine ou les fibres sont issues de maïs.

4. Composition selon la revendication 1, où les matières grasses sont de l'huile de palmiste ou de l'huile de coprah, ou des combinaisons et des fractions de celles-ci.

5. Composition selon la revendication 1, où les matières grasses vont de 5 à 8%, les protéines vont de 0,6 à 1,0%, l'édulcorant va de 12 à 18%, la composition comprend en outre du sirop de glucose déshydraté allant de 15 à 20%, et les fibres vont de 0,2 à 0,3%.

6. Composition selon la revendication 1, où l'émulsifiant est un émulsifiant huile-dans-eau.

7. Composition telle que définie selon la revendication 1, où le stabilisant est choisi parmi un carraghénane, la gomme guar, un alginate, la gomme xanthane, la méthylcellulose, la carboxyméthylcellulose, l'éthylcellulose, l'hydroxypropyl méthylcellulose, et la cellulose microcristalline.

8. Composition telle que définie selon la revendication 1, où la protéine est choisie parmi un caséinate de sodium, un caséinate de potassium, un caséinate de calcium, du lait écrémé, un extrait sec dégraissé du lait, un concentré de protéines du lait, un concentré de protéines de lactosérum, des isolats de protéines de lactosérum, l'alpha-lactalbumine, la bêta-lactoglobuline, une protéine de soja, une protéine de pois, une protéine de blé, une protéine de graine de coton, une protéine d'arachide, et une protéine de maïs.

9. Composition telle que définie selon la revendication 1, où la composition fouettable comporte :
| | |
|---|---|
| Eau | 35-65% en poids |
| Matières grasses | 4-10% en poids |
| Protéines | 0,5-2% en poids |
| Emulsifiant | 0,1-0,6% en poids |
| Sucre | 10-20% en poids |
| Sirop de glucose déshydraté | 10-25% en poids |
| Gommes & Stabilisants | 0,3-1% en poids |
| Sel | 0,1-0,5% en poids |
| Fibres de maïs ou d'avoine | 0,1-0,5% en poids |
| Additif colorant | 0,001-0,05% en poids |
| Agent aromatisant | 0,1-0,6% en poids. |

10. Composition telle que définie selon la revendication 1, où la composition fouettable comporte :
| | |
|---|---|
| Eau | 40-60% en poids |
| Matières grasses | 5-8% en poids |
| Protéines | 0,6-1% en poids |
| Emulsifiant | 0,2-0,4% en poids |
| Sucre | 12-18% en poids |
| Sirop de glucose déshydraté | 15-20% en poids |
| Gommes & Stabilisants | 0,4-0,8% en poids |
| Sel | 0,2-0,4% en poids |
| Fibres de maïs ou d'avoine | 0,2-0,3% en poids |
| Additif colorant | 0,01-0,03% en poids |
| Agent aromatisant | 0,2-0,4% en poids. |

11. Méthode de préparation d'une composition de nappage fouettable comprenant 10% ou moins de matières grasses et de 0,1 à 0,5% de fibres, où les fibres sont des fibres insolubles, la méthode comprenant les étapes consistant à :
a. mélanger les fibres dans une phase aqueuse dans des conditions de cisaillement élevé telles que lesdites fibres soient sensiblement ou totalement hydratées ;
b. ajouter et mélanger d'autres ingrédients afin de former ladite composition de nappage fouettable ;
où le diamètre moyen de taille de particule pondéré en volume d'au moins 80% des particules est compris entre 2 et 200 micromètres.

12. Méthode telle que définie selon la revendication 11, où la méthode comprend en outre les étapes consistant à :
c. chauffer la composition jusqu'à une température d'au moins 347°K (165°F) pendant au moins 5 minutes ;
d. homogénéiser la composition ;
e. refroidir la composition ; et
f. congeler la composition ;
et où les autres ingrédients comprennent des matières grasses, des protéines, des émulsifiants, des édulcorants et des stabilisants.

13. Méthode telle que définie selon la revendication 11 ou 12, comportant en outre l'étape consistant à fouetter la composition fouettable jusqu'à un foisonnement de 400% ou plus.

14. Méthode telle que définie selon la revendication 12 ou 13, où le mélange des fibres dans l'eau dans des conditions de cisaillement élevé a lieu à une température de 323°K-338°K (50°C-65°C).
